# EUROPÄISCHE PATENTANMELDUNG

(11) **EP 4 300 345 A1**
(43) Veröffentlichungstag der Anmeldung: **03.01.2024**
(21) Anmeldenummer: 22182353.7
(22) Anmeldetag: 30.06.2022
(51) Int. Cl.: G06F 30/13, G06T 7/00, G06T 19/20, G06F 111/12

(54) **COMPUTERIMPLEMENTIERTES VERFAHREN UND ANORDNUNG ZUM GENERIEREN EINES DIGITALEN 3D-, INSBESONDERE SOGENANNTE BUILDING INFORMATION MODELING -, BIM-, GEBÄUDEMODELLS SOWIE COMPUTERPROGRAMMPRODUKT**

(71) Anmelder: Siemens Schweiz AG, 8047 Zürich (CH)
(72) Erfinder: Klingbeil, Ralf, 15745 Wildau (DE); Mayer, Hermann Georg, 83209 Prien am Chiemsee (DE); Neumann, Martin Jonas, 64291 Darmstadt (DE); Zechlin, Oliver, 6300 Zug (CH)
(74) Vertreter: Siemens Patent Attorneys

(57) **Zusammenfassung**

Die Erfindung betrifft ein computerimplementiertes Verfahren und eine Anordnung zum Generieren eines digitalen 3D, insbesondere so genannte "Building Information Modeling"-, BIM-, Gebäudemodells, bei dem ausgehend von einem 2D-Gebäudemodell ein 3D-Gebäudemodell automatisiert erstellt wird. Ferner betrifft die Erfindung ein Computerprogrammprodukt.

## Beschreibung

Die Erfindung betrifft ein computerimplementiertes Verfahren zum Generieren eines digitalen 3D, insbesondere so genannte "Building Information Modeling"-, BIM-, Gebäudemodells gemäß Oberbegriff des Anspruchs 1, ein Computerprogrammprodukt gemäß dem Gattungsbegriff des Anspruchs 10 sowie eine Anordnung zum Generieren eines digitalen 3D, insbesondere so genannte "Building Information Modeling"-, BIM-, Gebäudemodells gemäß dem Oberbegriff des Anspruchs 11.

Es ist bekannt, Gebäude als Modelle darzustellen und hierzu die Modelldaten in Dateien zu speichern. Die technische Gebäude-Ausstattung (TGA) wird dabei überwiegend noch anhand von 2D Plänen geplant.

In der Regel ist in solchen Plänen ein geplantes Gebäude in einer für solche Pläne typischen Draufsicht, als Grundriss oder Deckenspiegel, dargestellt. Für Geräte, die in einem Gebäude installiert werden sollen, muss in der Regel die Einbauhöhe vermerkt werden, sofern sie sich nicht aus bestimmten Regeln oder auch Erfahrungen für einen einschlägigen Fachmann ohne Angabe ergibt.

Will man derartige 2D Pläne in ein digitales dreidimensionales Bauwerksmodell für die Abbildung eines tatsächlich ausgeführten Zustands, also ein "as-built" 3D Gebäudemodell, wie beispielsweise als Bauwerksdatenmodell bzw. so genannte Building Information Modeling BIM Modell erstellen, in dem die Daten aus den 2D Plänen dargestellt werden sollen, so müssen sie in der Regel manuell in das 3D Modell eingetragen werden.

Diese Übertragung ist arbeitsaufwändig und fehleranfällig. Eine naheliegende Verbesserung wäre die Verwendung eines einheitlichen 3D Modells von Anfang an; dass heißt ein Umsetzen des BIM Prozesses zusammen mit allen Zulieferern von Subsystemen von Begin der Planung an.

Diese Variante ist zwar in Diskussion und Planung aber eine Umsetzung und Durchdringung der Branche wird lange Zeit in Anspruch nehmen, so dass der oben beschriebene Prozess mit seinen Nachteilen bestehen bleibt.

Die der Erfindung zugrundeliegende Aufgabe ist es daher, eine Lösung anzugeben, die die Nachteile des Standes der Technik überwindet, insbesondere liegt die technische Aufgabe darin, eine Lösung anzugeben, die die Qualität von aus 2D Plänen gebildeten digitalen 3D-Gebäudemodellen verbessert.

Die Aufgabe wird erfindungsgemäß durch das computerimplementierte Verfahren zum Generieren eines digitalen 3D, insbesondere so genannte "Building Information Modeling"-, BIM-, Gebäudemodells gemäß Oberbegriff des Anspruchs 1 durch dessen kennzeichnenden Merkmale gelöst, durch das Computerprogrammprodukt gemäß Gattungsbegriff des Anspruchs 10, durch dessen Merkmale gelöst, sowie durch die Anordnung zum Generieren eines digitalen 3D, insbesondere so genannte "Building Information Modeling"-, BIM-, Gebäudemodells gemäß dem Oberbegriff des Anspruchs 11, durch dessen kennzeichnende Merkmale gelöst.

Sofern es in der nachfolgenden Beschreibung nicht anders angegeben ist, beziehen sich die Begriffe "durchführen", "berechnen", "rechnergestützt", "rechnen", "feststellen", "generieren", "konfigurieren", "rekonstruieren" und dergleichen vorzugsweise auf Handlungen und/oder Prozesse und/oder Verarbeitungsschritte, die Daten verändern und/oder erzeugen und/oder die Daten in andere Daten überführen, wobei die Daten insbesondere als physikalische Größen dargestellt werden oder vorliegen können, beispielsweise als elektrische Impulse. Insbesondere sollte der Ausdruck "Computer" möglichst breit ausgelegt werden, um insbesondere alle elektronischen Geräte mit Datenverarbeitungseigenschaften abzudecken. Computer können somit beispielsweise Personal Computer, Server, speicherprogrammierbare Steuerungen (SPS), Handheld-Computer-Systeme, Pocket-PC-Geräte, Mobilfunkgeräte und andere Kommunikationsgeräte, die rechnergestützt Daten verarbeiten können, Prozessoren und andere elektronische Geräte zur Datenverarbeitung sein.

Unter "rechnergestützt" oder "computergestützt" kann im Zusammenhang mit der Erfindung beispielsweise eine Implementierung des Verfahrens verstanden werden, bei dem insbesondere ein Prozessor mindestens einen Verfahrensschritt des Verfahrens ausführt.

Unter einem Prozessor kann im Zusammenhang mit der Erfindung beispielsweise eine Maschine oder eine elektronische Schaltung verstanden werden. Bei einem Prozessor kann es sich insbesondere um einen Hauptprozessor (engl. Central Processing Unit, CPU), einen Mikroprozessor oder einen Mikrokontroller handeln. Bei einem Prozessor kann es sich beispielsweise auch um einen IC (integrierter Schaltkreis, engl. Integrated Circuit), insbesondere einen FPGA (engl. Field Programmable Gate Array) oder einen ASIC (anwendungsspezifische integrierte Schaltung, engl. Application-Specific Integrated Circuit), oder einen DSP (Digitaler Signalprozessor, engl. Digital Signal Processor) oder einen Grafikprozessor GPU (Graphic Processing Unit) handeln. Auch kann unter einem Prozessor ein virtualisierter Prozessor, eine virtuelle Maschine oder eine Soft-CPU verstanden werden. Es kann sich beispielsweise auch um einen programmierbaren Prozessor handeln, der mit Konfigurationsschritten zur Ausführung des genannten erfindungsgemäßen Verfahrens ausgerüstet wird oder mit Konfigurationsschritten derart konfiguriert ist, dass der programmierbare Prozessor die erfindungsgemäßen Merkmale des Verfahrens, der Komponente, der Module, oder anderer Aspekte und/oder Teilaspekte der Erfindung realisiert.

Unter einer "Speichereinheit" oder einem "Speichermodul" und dergleichen kann im Zusammenhang mit der Erfindung beispielsweise ein flüchtiger Speicher in Form von Arbeitsspeicher (engl. Random-Access Memory, RAM) oder ein dauerhafter Speicher wie eine Festplatte oder ein Datenträger sowie eine Kombination aus einer oder mehrerer dieser Elemente zur Bildung einer so genannten Cloud verstanden werden.

Unter einem "Modul" kann im Zusammenhang mit der Erfindung beispielsweise mindestens ein Prozessor und/oder mindestens eine Speichereinheit zum Speichern von Programmbefehlen verstanden werden, welche physisch an einem Ort, beispielsweise einem Teil eine Leiterplatte, oder auch auf mehreren Entitäten eines Netzwerks verteilt funktional zusammenwirkend verbunden sind. Beispielsweise ist der Prozessor speziell dazu eingerichtet, die Programmbefehle derart auszuführen, damit der Prozessor Funktionen ausführt, um das erfindungsgemäße Verfahren oder einen Schritt des erfindungsgemäßen Verfahrens zu implementieren oder realisieren.

Das erfindungsgemäße computerimplementierte Verfahren zum Generieren eines digitalen 3D, insbesondere so genannte "Building Information Modeling"-, BIM-, Gebäudemodells, weist die Schritte auf:
a) Einlesen eines ersten einem Gebäude zugeordneten 2D-Gebäudeplans über eine erste Schnittstelle,
b) Autodetektion mindestens eines Gebäudeplansymbols innerhalb des 2D-Gebäudeplans durch ein erstes Modul,
c) Autodetektion von mit, durch das jeweilige Gebäudeplansymbol zugeordneten im Gebäude zu installierenden, Geräten assoziierten Textdaten, innerhalb des 2D-Gebäudeplans, durch ein zweites Modul,
d) Durchführung einer Prozedur zur Bestimmung des Installationsortes, insbesondere die x,y-Koordinaten im 2D-Gebäudeplan, des jeweiligen Gerätes und Bestimmung von 3D-Koordinaten basierend auf einer Projektion, zumindest auf Grundlage der x,y-Koordinaten, insbesondere gemeinsam mit mindestens einem dem Gerät eindeutig zugeordneten Parameter, in den dreidimensionalen Raum eines 3D-Gebäudemodells des Gebäudes, das, insbesondere basierend auf einem aus dem mindestens einem dem Gebäude zugeordneten 2D-Gebäudeplan, initial gebildet wurde, durch ein drittes Modul,
e) Aktualisieren des 3D-Gebäudemodels durch Hinzufügen eines 3D-Gebäudemodells des Gerätes an den x,y,z-Koordinaten des bestimmten Installationsortes, durch ein viertes Modul,
f) Wiederholen der Schritte a) bis e), bis für alle aufgrund des mindestens einen 2D-Gebäudeplans verfügbaren Gebäudeplansymbole und/oder Textdaten die Autodetektion durchgeführt worden ist und/oder eine Abbruchbedingung erreicht worden ist, durch ein fünftes Modul,
g) Bilden von strukturierten, das aktualisierte 3D-Gebäudemodell repräsentierenden, Daten und Abspeichern der das aktualisierte 3D-Gebäudemodel repräsentierenden Daten.

Das erfindungsgemäße Verfahren hat unter anderem den Vorteil, dass es weitestgehend automatisch einen vorhandenen 2D Gebäudeplan in einen 3D Gebäudeplan umsetzen kann. Weitestgehend bedeutet dabei, dass insbesondere auf eine Bedienung eines das erfindungsgemäße Verfahren implementierenden Gerätes durch einen Nutzer hierdurch nicht umgangen werden, welche beispielsweise das Auslösen von Autodetektion oder Eingaben von einer Auswahl, im Falle von einem Vorhandensein von mehreren Handlungs-/Auswahloptionen und/oder Eingaben zur Aufhebung eines Fehlers. Dabei ermöglicht das erfindungsgemäße Verfahren eine effektive Nutzung aller explizit und/oder implizit im zugrundeliegenden 2D Gebäudeplan entnehmbaren Informationen, so dass Eingaben und/oder Aufrufen von Bibliotheken auf ein Mindestmaß reduziert werden können.

Das erfindungsgemäße Computerprogrammprodukt, zeichnet sich dadurch aus, dass es direkt in ein programmierbares prozessorgesteuertes Gerät, Computer, Tablett und/oder Tablet, ladbar ist, umfassend Programmcodeteile, die dazu geeignet sind, die Schritte des computerimplementierten Verfahrens nach einem der Ansprüche 1 bis 9 durchzuführen. Es ermöglicht somit die Realisierung der Vorteile des erfindungsgemäßen Verfahrens, in dem es das Gerät mit der ausführbaren Implementierung des Verfahrens ausstattet.

Gleiches gilt für die erfindungsgemäße Anordnung zum Generieren eines digitalen 3D, insbesondere so genannte "Building Information Modeling"-, BIM-, Gebäudemodells gemäß, das sich dadurch auszeichnet, dass es Mittel zur Durchführung des Verfahrens und/oder einer seiner Ausgestaltungen und Weiterbildungen und/oder Mittel zum Laden des Computerprogrammprodukts umfasst.

Hierdurch trägt sie also ebenso zur Implementierung und mutatis mutandis damit auch zur Realisierung der im Zusammenhang mit dem Verfahren genannten Vorteile bei.

Weitere vorteilhafte Ausgestaltungen und Weiterbildungen der Erfindung sind durch die Unteransprüche angegeben.

Gemäß einer vorteilhaften Weiterbildung des computerimplementierten Verfahrens wird die erste Schnittstelle derart betrieben wird, dass das Einlesen des mindestens einen 2D-Gebäudeplans durch Auslesen von aus strukturiert in einem Speicher abgelegten Daten und/oder durch optisches Scannen eines gezeichneten Planes erfolgt.

Gemäß einer vorteilhaften Weiterbildung des computerimplementierten Verfahrens wird eine, insbesondere mit der ersten Schnittstelle identischen, zweite Schnittstelle derart betrieben, dass
a) ein zu detektierendes Gebäudeplansymbol durch eine Nutzereingabe und/oder ein optisches Erfassen eines gezeichneten Plans oder im Gebäude zu installierenden Geräts erfasst und für eine, insbesondere automatische, Auswahl eines zugeordneten ersten Suchmusters für die Autodetektion, insbesondere aus einer ersten Bibliothek verwandt wird,
b) das Suchmuster dem ersten Modul zur Durchführung der Autodetektion bereitgestellt wird.

Gemäß einer weiteren vorteilhaften Weiterbildung des computerimplementierten Verfahrens
a) wird das erste Modul derart betrieben, dass das 2D-Gebäudemodell anhand eines durch eine optische Schnittstelle durchgeführten optischen und/oder anhand eines durch strukturiert in einem Speicher abgelegten Daten des 2D-Gebäudemodells digitalen Vergleichs mit dem Suchmuster durchgeführt wird, wobei bei Übereinstimmung das zu installierende Gerät bestimmt wird,
b) wird das zweite Modul derart betrieben, dass die x,y-Koordinaten innerhalb des 2D-Gebäudeplans auf Basis von optischem Scannen des gezeichneten 2D-Gebäudeplans und/oder der strukturiert abgelegten Daten des 2D-Gebäudeplans extrahiert werden,
c) werden die x,y-Koordinaten für eine Aktualisierung des 3D-Gebäudemodells strukturiert gespeichert und/oder direkt dem dritten Modul zur bereitgestellt.

Hiermit wird also im Wesentlichen allein aufgrund der in einem 2D-Gebäudeplan enthaltenen Angaben sowohl Suchmuster zu extrahieren als auch mit den Suchmustern die Koordinaten in der Ebene zu ermitteln, um beides für eine Übertragung in den dreidimensionalen Raum zur Verfügung zu haben.

Gemäß einer weiteren Weiterbildung des computerimplementierten Verfahrens wird das zweite Modul derart betrieben, dass ein Ermitteln eines Musters zur Autodetektion von Textdaten im 2D-Gebäude durch Auslesen aus einer ersten Bibliothek, Nutzereingabe und/oder durch optisches Scannen des 2D-Gebäudeplans erfolgt.

Hiermit wird der erfindungsgemäße Grundgedanke mit möglichst wenigen Nutzereingaben und/oder Quellen von einem 2D-Gebäudemodell zu einem 3D-Gebäudemodell zu gelangen, weitergebildet, in dem weitestgehend auf allgemeine Datenbasen und/oder den 2D-Gebäudeplan auch für eine Textdatenanalyse zurückgegriffen wird, wobei bei einer Implementierung in der Regel auch eine Nutzereingabe und entsprechende Einrichtungen nach wie vor zur Verfügung gestellt werden können, nicht zuletzt, um beispielsweise unvorhergesehene Zustände, wie etwa ergebnislose Suche, und/oder Fehlerzustände durch Nutzereingaben behandeln lassen zu können.

Gemäß einer weiteren Weiterbildung des computerimplementierten Verfahrens wird das dritte Modul derart betrieben, dass die Bestimmung der 3D-Koordinaten auf Grundlage zumindest eines Parameters, beispielsweise geographische Adressdaten, Geräteabmessungen, Schwellwerte, Montagehöhen, Toleranzwerte einzelner oder aller der genannten Werte und/oder, insbesondere bevorzugte, Ausrichtungen, des jeweiligen Gerätes erfolgt, wobei der Parameter durch Nutzereingabe, Auswertung der Daten des 2D-Gebäudemodells und/oder durch Scannen des 2D-Gebäudeplans, insbesondere im Nahfeld des dem Gerät zugeordneten Symbols, bestimmt wird.

Mit dieser Weiterbildung lassen sich typischer Weise ebenfalls in einem 2D-Gebäudeplan auffindbaren Daten auf vorteilhafte Weise für die Transformation in ein 3D-Gebäugemodell nutzen. Mit geografischen Adressdaten lassen sich beispielsweise ortstypische Toleranzen im Bau oder bei den eingesetzten Geräten bestimmen und so den weiteren Schritten des erfindungsgemäßen Transformationsprozesses zugrunde legen. Maße wie Montagehöhen, Toleranz- und/oder Schwellwerte können dabei im Gegensatz direkt die Maße im 3D-Gebäudemodell übertragen werden, andere Parameter wie die Ausrichtung dienen demgegenüber weniger zur Dimensionsbestimmung, sondern vielmehr der grundsätzlichen Positionierung. Dabei verfolgt diese Weiterbildung ebenfalls das Ziel möglichst automatisch aus typischen Quellen die Parameter bzw. deren Werte zu entnehmen und somit im Wesentlichen auf Nutzereingaben zu verzichten bzw. auf notwendige Ausnahmen zu reduzieren.

Gemäß einer weiteren Weiterbildung des computerimplementierten Verfahrens wird das vierte Modul derart betrieben, dass das Hinzufügen auf Grundlage zumindest des einen Parameters derart erfolgt, dass für das Gerät zumindest temporär ein Begrenzungsrahmen als dreidimensionale Repräsentation des Geräts im 3D-Gebäudemodell ermittelt und als Teil der strukturierten Daten hinterlegt wird.

Hiermit wird ein auch als "Bounding Box" bekannter Umriss als Repräsentation des jeweiligen Gerätes in einem 3D-Gebäudemodell möglich. Dies kann als gröbste Darstellung beispielsweise für weitere Schritte des erfindungsgemäßen Prozesses dienen und gegebenenfalls, beispielsweise aufgrund der in diversen Quellen auffindbaren oder dem Nutzer bekannten Details - also durch weitere Parameter - verfeinert werden. Gemäß einer weiteren Weiterbildung des computerimplementierten Verfahrens wird das dritte Modul und/oder vierte Modul derart betrieben, dass
a) die Projektion zur Bestimmung der 3D-Koordinaten derart durchgeführt wird, dass durch ein siebtes, insbesondere eine so genannte 3D-Engine betreibendes, Modul, insbesondere auf Grundlage des zumindest einen Parameters, ausgehend von den x,y-Koordinaten des 2D-Gebäudeplans und einer, insbesondere auf Grundlage des zumindest einen Parameters, festgelegten y-Koordinate eines durch einen im 3D-Gebäudemodell simulierten Lichteinfalls einen Schattenwurf derart errechnet, dass zumindest eine Fläche, insbesondere an einer Decke oder Wand des 3D-Gebäudemodells, bestimmt wird, an die das Gerät im 3D-Gebäudemodell kollisionsfrei platzierbar ist,
b) auf Grundlage des zumindest einen Parameters die Fläche und die x,y,z-Koordinaten des Gerätes festgelegt und/oder als Teil der strukturierten Daten gespeichert wird.

Hierdurch kann beispielsweise mit der auf Grundlage der im 2D Gebäudeplan erkannten Symbole eine "Bounding Box" und auf Grund von ermittelten Parametern, die einen etwaigen Toleranzbereich bestimmen und/oder ebenfalls als Parameter bestimmten Montageort in dem 3D-Gebäudemodell, eine Projektionsrichtung ermittelt werden, die beim Feintuning der Positionierung des Geräts im 3D-Gebäudemodell hilft.

Der Montageort kann dabei beispielweis in einer Bibliothek vermerkt sein. Handelt es sich zum Beispiel um ein Gerät für das eine Deckenmontage vorgesehen ist, ergibt sich eine Projektion in +z-Richtung bei Deckenmontage (entsprechend -z-Richtung bei Bodenmontage).

Ferner wird hiermit wird im Rahmen des angegebenen und/oder ausgelesenen Toleranzbereichs entsprechen ein Schattenwurf auf die Decke bzw. den Boden projiziert. Dieser kalkulatorische Schattenwurf ergibt also ein Objekt mit dem Kollisionen mit anderen Objekten im dreidimensionalen Modell detektierbar werden.

Derartige kalkulatorische Schattenwürfe können beispielsweise mit gängigen Beleuchtungsmodellen einer 3D-Engine vorgenommen werden.

Zur Bestimmung der Kollisionsfreiheit können beispielsweise alle in Frage kommenden Oberflächen des 3D-Gebäudemodells, beispielsweise Oberflächen von Wänden, dahingehend untersucht, ob es eine Normale der Fläche gibt, die sich mit dem Toleranzbereich schneidet. Gibt es mehrere, so wird die Fläche mit dem geringsten Abstand als Projektionsfläche verwendet.

Alternativ oder ergänzend kann die Einhaltung bestimmter Regeln für die Platzierung mit überwacht werden.

Als weitere Ergänzung kann es vorgesehen sein, dass für den Fall, dass dies nicht möglich ist, die Platzierung abgebrochen und ein Fehler ausgegeben wird.

In diesem Fall wird das Verfahren für alle Teilflächen wiederholt. Verbleiben mehrere gültige Optionen, so wird diejenige mit dem kürzesten Projektionsweg gewählt.

Alternativ oder ergänzend könnte dies auch so aufgelöst werden, dass es in diesem Fall beispielsweise zu einer der oben genannten möglichen notwendigen Nutzereingaben führt. Vorzugsweise diese also als Ergänzung realisiert ist.
Gemäß einer weiteren Weiterbildung des computerimplementierten Verfahrens werden die strukturierten Daten in einer, zumindest temporär in einem integrierten flüchtigen Speichermodul, einem Wechselspeichermedium und/oder einem cloudbasierten Speicher gespeicherten, Datenbank hinterlegt.

Hierdurch stehen die Daten für ein wiederholtes Abrufen zur Verfügung, ebenso wie für sukzessive Aktualisierungen, die durch voranschreitende Baumaßnahmen und/oder Anpassungen des Ursprungsplans notwendig sein können.

Die in Bezug auf das Verfahren zum Generieren eines digitalen 3D, insbesondere so genannte "Building Information Modeling"- , BIM-, Gebäudemodells nachstehend angeführten Vorteile und bevorzugten Ausgestaltungen, lassen sich dabei sinngemäß auf die erfindungsgemäße Anordnung zum Generieren eines digitalen 3D, insbesondere so genannte "Building Information Modeling"- , BIM-, Gebäudemodells und seine sich mit den Ausgestaltungen des Verfahrens ergebenden bevorzugten Ausgestaltungen übertragen. Gleiches gilt für das Computerprogrammprodukt.

Weitere Vorteile und Details der Erfindung werden anhand der in den Figuren 1 bis 4 dargestellten Ausführungsbeispiele der Erfindung erläutert. Dabei zeigt
- FIGUR 1: schematisch als ein Schritt eines Ausführungsbeispiels des erfindungsgemäßen Verfahrens eine Detektion und Überführung von Symbolen aus einem 2D Modell in ein 3D Modell am Beispiel von Feueralarmsystemen,
- FIGUR 2: schematisch als ein Schritt eines Ausführungsbeispiels des erfindungsgemäßen Verfahrens eine Detektion von Textdaten im Rahmen der Überführung 2D auf 3D am Beispiel von Lüftungsanlagen,
- FIGUR 3: schematisch als ein Schritt eines Ausführungsbeispiels des erfindungsgemäßen Verfahrens eine Prozedur zur Detektion eines Installationsorte im Rahmen der Überführung 2D auf,
- FIGUR 4: schematisch eine ein Ausführungsbeispiel des erfindungsgemäßen, auf einem Mobilteil, als Ausführungsbeispiel der erfindungsgemäßen Anordnung implementierten, Verfahrens darstellenden Ablaufdiagramm.

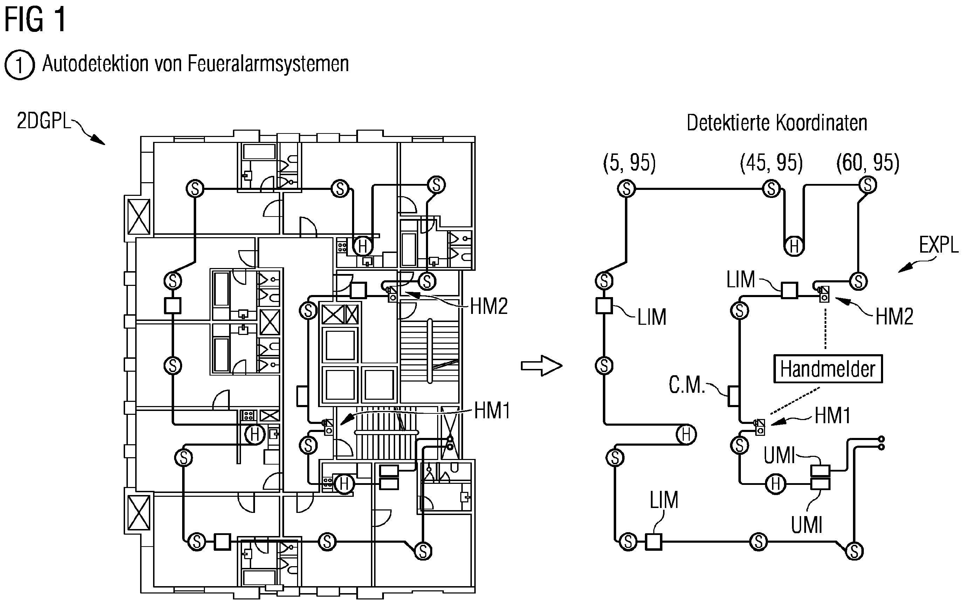

Bei den im Folgenden in FIGUR 1 bis FIGUR 4 erläuterten Ausführungsbeispielen handelt es sich um bevorzugte Ausführungsformen und Weiterbildungen der Erfindung.

Bei den Ausführungsbeispielen stellen die beschriebenen Komponenten der Ausführungsformen jeweils einzelne, unabhängig voneinander zu betrachtende Merkmale der Erfindung dar, welche die Erfindung jeweils auch unabhängig voneinander weiterbilden und damit auch einzeln oder in einer anderen als der gezeigten Kombination als Bestandteil der Erfindung anzusehen sind.

Des Weiteren sind die beschriebenen Ausführungsformen auch durch weitere der bereits beschriebenen Merkmale der Erfindung ergänzbar.

Einander entsprechende Teile sind in allen Figuren mit den gleichen Bezugszeichen versehen.

Insbesondere zeigen die nachfolgenden Ausführungsbeispiele lediglich beispielhafte Realisierungsmöglichkeiten, wie insbesondere solche Realisierungen der erfindungsgemäßen Lehre aussehen könnten, da es unmöglich und auch für das Verständnis der Erfindung nicht zielführend oder notwendig ist, all diese Realisierungsmöglichkeiten zu benennen.

Auch sind insbesondere einem (einschlägigen) Fachmann in Kenntnis des/der Verfahrensanspruchs/Verfahrensansprüche alle im Stand der Technik üblichen Möglichkeiten zur Realisierung der Erfindung selbstverständlich bekannt, sodass es insbesondere einer eigenständigen Offenbarung in der Beschreibung nicht bedarf.

In FIGUR 1 ist ein 2D Gebäudeplan 2DGPL als Grundriss in der Draufsicht dargestellt.

Die Darstellung in der FIGUR 1 zeigt nun schematisch wie sich gemäß erfindungsgemäßer Vorgehensweise aus diesem Gebäudeplan 2DGPL gemäß Ausführungsbeispiel des erfindungsgemäßen Verfahrens durch die erfindungsgemäße Detektion innerhalb des Gebäudeplans Koordinaten von Geräten bestimmen lassen.

Hierzu werden all die im Gebäudeplan 2DGPL verfügbaren Daten des Plans 2DGPL, wie Maßstab, Symbole und/oder Weiteres, genutzt, um sie einer prozessorgesteuerten Datenverarbeitung zu unterwerfen. Hierdurch wird unterstützt zum einen automatisch relevante Geräte auf dem Plan zu ermitteln und zum anderen ebenso automatisch deren Koordinaten zu bestimmen.

Dies wird dann strukturiert zumindest temporär in einem Speicher hinterlegt, so dass das beispielsweise für weitere Prozessschritte aber auch bei der Modellierung, anderweitige Manipulation und/oder Darstellung als dreidimensionales Modell, insbesondere BIM Modell, genutzt werden kann.

Auf diese Art hebt sich die Erfindung von dem oben erwähnten Ansatz aus dem Stand der Technik, bei dem eine Übertragung der 2D Planungsunterlagen in ein 3D BIM-Modell, wenn überhaupt, nur manuell erfolgte, in vorteilhafter Weise ab, da die Übertragung schneller und weitestgehend ohne Eingriff eines Nutzers erfolgen kann.

Die Erfindung erlaubt es auch davon Abstand zu nehmen die x,y-Koordinaten eines Geräts im 2D Gebäudeplan 2DGPL manuell auszumessen und das Objekt anschließend in einer dem Gerätetyp entsprechenden z-Höhe (und in geeigneter Ausrichtung des Modells) in den 3D Plan einzufügen.

Es besteht auch nicht mehr der Anspruch an einen Benutzer seine Erfahrung in der Gebäudeplanung einzusetzen bzw. eine derartige Erfahrung überhaupt zu besitzen, die nötig war, da es sich bei der 2D-Darstellung oft um eine schematische Darstellung handelt, welche eine entsprechende Erfahrung des Bearbeiters erfordert, um auch das exakte Platzieren in x,y Position zu ermöglichen. Stattdessen bringen die erfindungsgemäßen Verfahrensschritte bei der automatischen Detektion und Überführung derartiges Wissen ein bzw. machen die Anwendung von solchem Wissen stellenweise obsolet.

Der Transfer von 2D zu 3D wird durch Anwendung des erfindungsgemäßen Verfahrens also vereinfacht.

Für Nutzer ohne solches Wissen würden Fallstricke bestehen bleiben, wie beispielsweise jene, die sich ergeben, weil Geräte in der Regel durch Symbole repräsentiert sind, die in Maßstabsdarstellung deutlich größer sind als ihre die real eingesetzten Geräte, aber auch daher ergeben, dass, um Überlappungen mit anderen Informationen, beispielsweise Wänden zu vermeiden, die Symbole zudem oft leicht verschoben werden und dazu führen, dass beispielsweise die Symbole in der FIGUR 1, die für Feuermelder eingetragen sind einen Durchmesser von ca. 0,5m im dargestellten Maßstab aufweisen, die Geräte in Realität aber eigentlich nur ca. 10cm im Durchmesser aufweisen, wobei erschwerend hinzukommt, dass bei asymmetrischen Symbolen, wie bei Feuermeldern auch nicht ohne Weiteres festgestellt werden kann, wo ein Mittelpunkt des Gerätes bzw. dessen Montagestelle genau liegt.

Diese Fallstricke können bei einer Automatisierung ebenfalls umgangen werden.

Das Ausführungsbeispiel der Erfindung stellt auch - wie weiter unten noch erläutert wird, Mittel und Prozessschritte zur Verfügung, die Konflikte bei der Platzierung von Objekten vermeiden, die dadurch entstehen, das in den Plänen der Zulieferer zudem oft bestimmte Objekte, insbesondere jene von anderen Zulieferern, noch nicht enthalten sind, sodass es zu Konflikten kommen kann, die ohne die Erfindung manuell aufgelöst werden müssen. So vermeidet die Erfindung, beispielswiese auch, dass ein Rauchmelder im Plan an einer Stelle platziert wurde, die im Gebäude schon durch ein Klimagerät besetzt ist.

Mit der Erfindung wird dann auch die Akzeptanz größer alle Informationen und Pläne in ein zentrales 3D Modell zusammenzuführen. Die Erfindung unterstützt somit auch, dass Konfiguration vieler Systeme auf eine einheitliche Namensgebung bzw. einheitliche IDs gebracht werden, um deren Nachverfolgung über viele verschiedene Pläne hinweg zu ermöglichen. Damit wird es auch möglich zu Zeitpunkten nach einer Fertigstellung eines derart geplanten Gebäudes sich beispielsweise für eine Renovierung ein einheitliches Bild der Lage zu verschaffen

Dies alles ist gegeben, weil durch die Erfindung der Vorgang weitgehend automatisiert und standardisiert wird. Insbesondere wird gemäß der Erfindung ein einheitliches (bzw. föderiertes) 3D Modell erzeugt, das alle Gewerke und Systeme eines Gebäudes umfasst.

Föderiert bedeutet allgemein, dass ein föderiertes Informationssystem ein Informationssystem ist, das einen Zugriff auf mehrere autonome Informationsquellen bietet und somit bedeutet es im Zusammenhang mit Ausführungsformen der Erfindung, , dass Gewerke zwar in verschiedenen Modellen dargestellt werden, diese aber jederzeit ohne Aufwand zusammengeführt werden können, beispielsweise eine so genannte Clash-Detection bereitzustellen, wobei Clash-Detection in der Regel im Zusammenhang mit, insbesondere BIM, Modellen die Kollisionserkennung meint, welche alle virtuellen Repräsentationen von Gebäudeelementen während des Entwurfs koordiniert und Konflikte und Koordinationsprobleme identifiziert.

Beispielsweise kann dies zwischen so genannten HVAC-, also "Heating, Ventilation and Air Conditioning-", (Klima-), Geräten, und Brandmeldern erfolgen wie sie im linken 2D Gebäudeplan 2DGPL angeordnet sind.

Gemäß dem in FIGUR 1 gezeigten Beispiel wird nun schematisch aufgezeigt, dass als ein erster wichtiger Schritt für einen automatisierten Prozess gemäß Ausführungsbeispiel des erfindungsgemäßen Verfahrens eine automatische Extraktion der entsprechenden Symbole und Bezeichner aus dem 2D Plan 2DGPL auf der linken Seite erfolgt.

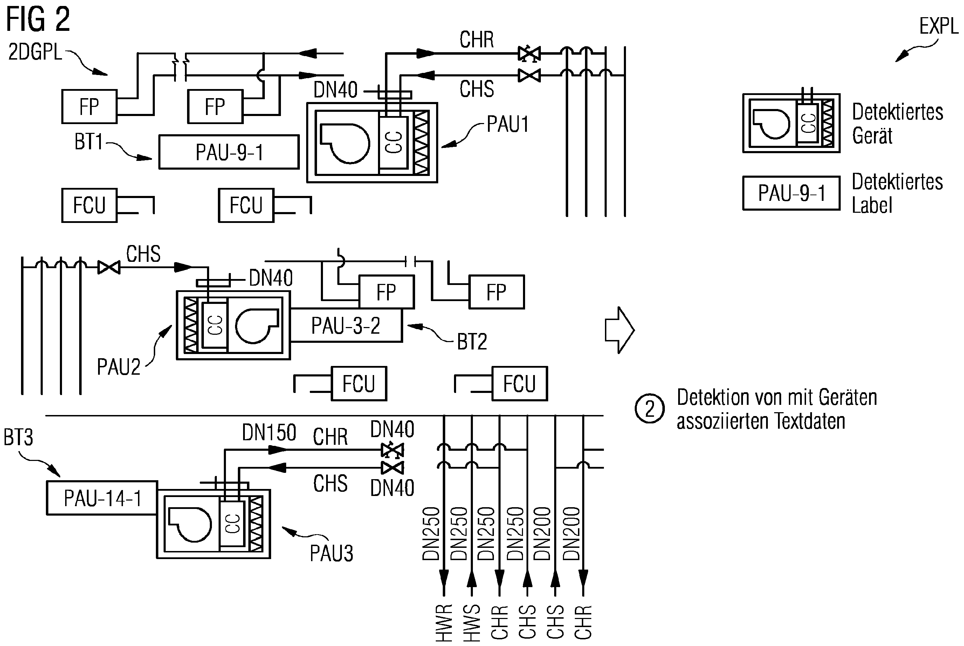

Diese kann beispielsweise über bekannte Mustererkennungsprozeduren erfolgen. Da die Symbole im 2D Gebäudeplan 2DGPL meist aus einer Bibliothek in den Plan übertragen werden und daher gleich aussehen, liefert so eine Mustererkennung verlässliche Ergebnisse. Die in der FIGUR 1 (sowie auch in der später beschriebenen FIGUR 2) sind unter anderem die Symbole der Brandmeldeanlage HM1, HM2 bzw. der Klimaanlage gemäß erfind automatisch erkannt und in einer dem 3D Modell zugrundeliegenden Struktur, einem extrahierten Gebäudeplan EXPL auf der rechten Seite überführt worden. Dabei sind in der FIGUR 1 auch die Stromverbindungen korrekt erfasst und wiedergegeben worden.

In der FIGUR 1 kann ferner in dem extrahierten Plan jedem erkannten Gerät dabei eine x,y-Koordinate, die dem extrahierten 2D Plan EXPL zugeordnet werden. Das Verfahren kann dafür die Informationen, welche im 2D Gebäudeplan 2DGPL inhärent zu eigen sind, wie beispielsweise dem Maßstab und den Maßen im Plan, ggf. Informationen wie vorgegebene, normierte, Dimensionen von Geräten, oder Vergleichbares verwenden.

Ein weiterer Verfahrensschritt ist schematisch in der FIGUR 2 dargestellt. Dieser Schritt ist wie trägt erfindungsgemäß dazu bei, die gewünschte Verbesserung zum Erzielen, in dem neben der Erkennung der Symbole, auch die zumindest teilweise automatisierte Erfassung von Zusatzinformation durchgeführt wird.

Unter Zusatzinformationen können beispielsweise alle Informationen aus gegebenen 2D Plänen mitsamt aller Gewerkepläne, die erfindungsgemäß als Parameter ins 3D Modell übernommen werden, verstanden werden. Beispielsweise geografische Adressen, IDs, Schwellwerte Und/oder Montagehöhen und/oder Ausrichtungen).

Für das Erkennen der Zusatzinformation sind gemäß erfindungsgemäßem Ausführungsbeispiel zusätzlich zum gesuchten Symbol Textmuster definiert, die als Vorlage für den gesuchten Text dienen und spezifisch zum gesuchten Symbol passen.

So kann beispielsweise wie in FIGUR 2 schematisch angedeutet, die Suche nach dem Bezeichner für die auch als so genannte "Primary Air handling Unit (PAU)" PAU bezeichnete Lüftungsanlagen PAU1...PAU3, dadurch eingeschränkt werden, dass in einem festgelegten Umkreis nach Texten- BT1...BT3 gesucht wird, die mit dem Teilwort "PAU" beginnen.

Wie in FIGUR 2 ersichtlich, ist gemäß dem Ausführungsbeispiel der Erfindung bei dieser automatisierten Erkennung gemäß Erfindung die genaue Lage des Texts dabei unerheblich. Hiermit wird vorteilhaft dem Umstand Rechnung getragen, dass die Texte oft variabel im Verhältnis zum Symbol platziert sind, beispielsweise um Verdeckungen anderer Symbole des Plans zu vermeiden.

Durch das System werden daher gemäß dem Ausführungsbeispiel des Verfahrens diejenigen Texte BT1...BT3 ausgewählt, auf die das Textmuster "PAU" passt und die am nächsten zum erkannten Symbol PAU1...PAU3 liegen. Hiermit wird dem Umstand Rechnung getragen, dass das Textmuster ja auch auf die Bezeichner weiterer, gleichartiger Symbole passen. Somit wird diese mögliche Fehlerquelle dank dieser Vorgehensweise ausgeschlossen.

Die Textmuster können am besten über reguläre Ausdrücke realisiert werden, beispielsweise "PAU-[0-9]+-[0-9]+.

Nachdem die Symbole und die entsprechenden Parameter im 2D Plan gefunden und beispielsweise dem extrahierten PL EXPL als strukturierte Information hinzugefügt wurden, kann man diese in einem nächsten nicht dargestellten Schritt automatisiert in ein existierendes 3D (BIM) Modell eintragen. Hierzu ist gemäß vorteilhafter Weiterbildung vorgesehen, dass, dass das 2D Modell 2DGPL in bekannter Weise bereits auf den Grundriss des BIM-Modells referenziert ist.

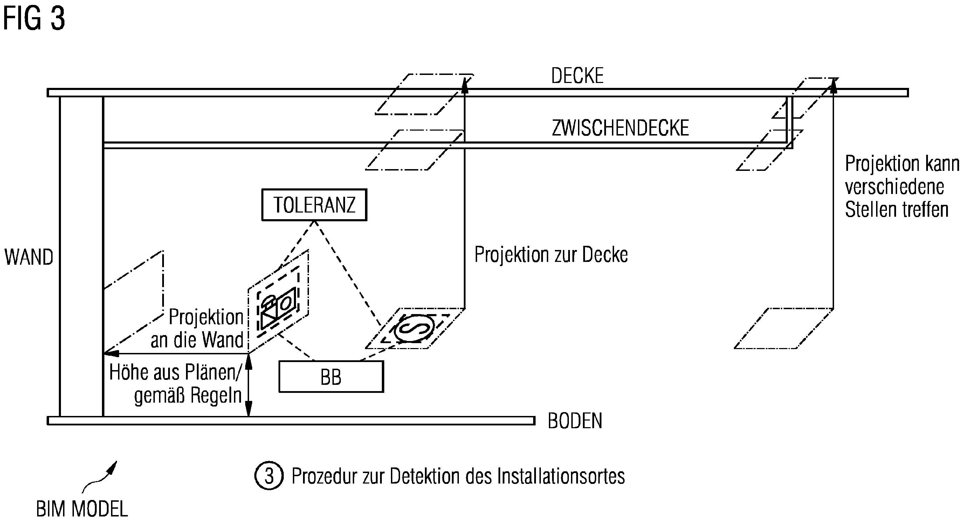

Nach diesem Schritt kann dann gemäß der in der FIGUR 3 gezeigten schematischen Darstellung des Ausführungsbeispiels die im 2D Plan 2dGPL erkannten Symbole nun zunächst jeweils ein auch als "Bounding Box" BB bezeichneter Begrenzungsrahmen berechnet und diese ggf. vorteilhaft weitergebildet mit einem Toleranzbereich versehen werden.

Die Größe des Toleranzbereichs kann gemäß einer Weiterbildung auf vorteilhafte Weise symbolspezifisch, also als eine mögliche strukturierte Ablage, in der Bibliothek hinterlegt werden. Ebenso kann gemäß der Weiterbildung in der Bibliothek vermerkt sein, an welches BIM-Element das jeweilige Symbol montiert werden kann.

Hieraus ergibt sich dann unter anderem auch eine in FIGUR 3 gezeigte Projektionsrichtung von 2D auf das3D Modell BIM MODEL. Dies kann beispielsweise bei vorgesehener Deckenmontage eine Projektion in +z-Richtung sein und entsprechend in - z-Richtung bei vorgesehener Bodenmontage.

Bei Deckenmontage oder Bodenmontage reicht es wie schematisch zu erkennen aus, startend vom 2D Symbol eine senkrechte Projektion auf die Decke DECKE oder den Boden BODEN vorzunehmen. Dazu wird vom in FIGUR 3 angegebenen Toleranzbereich TOLERANZ quasi ein Schattenwurf auf die Decke DEKCE bzw. den Boden BODEN projiziert.

Eine entsprechende Berechnung kann gemäß einer weiteren Weiterbildung des erfindungsgemäßen Verfahrens mit einem Beleuchtungsmodell einer 3D-Engine vorgenommen werden.

Bei einer Wandmontage muss gemäß erfindungsgemäßem Ausführungsbeispiel zunächst noch die geeignete Projektionsrichtung berechnet werden. Dazu werden alle in Frage kommenden Oberflächen des 3D-Gebäudemodells BIM MODEL, beispielsweise Oberflächen von Wänden WAND, dahingehend untersucht, ob es eine Normale der Fläche gibt, die sich mit dem Toleranzbereich TOLERANZ schneidet. Gibt es mehrere, so wird die Fläche mit dem geringsten Abstand als Projektionsfläche verwendet.

Für die Projektion auf diese Fläche muss auch die Montagehöhe über Boden BODEN bekannt sein. Diese kann gemäß einer Weiterbildung in der Bibliothek objekttypspezifisch hinterlegt werden.

Elemente, die nicht für eine Montage in Frage kommen, wie beispielsweise Möbel werden gemäß Ausführungsbeispiel in dieser Berechnung zunächst ignoriert. Elemente, die hierfür in Frage kommen, gemäß Ausführungsbeispiel der Erfindung in der Library spezifiziert.

Im einfachsten Fall kann nun einfach das 3D Modell BIM MODEL des Geräts im Zentrum des Schattenwurfs platziert werden. Kommt es allerdings zu Kollisionen mit anderen Objekten (z.B. Rohrleitungen - "Clash-Detection!") so kann das Modell des Geräts so lange in der Projektionsfläche verschoben werden, bis keine Konflikte mehr auftreten. Ist dies nicht möglich, so wird ein Fehler ausgegeben. Zusätzlich kann die Einhaltung bestimmter Regeln für die Platzierung mit überwacht werden (so müssen Brandmelder z.B. eine bestimmte Entfernung von anderen Objekten einhalten). Ist dies nicht möglich so wird die Platzierung abgebrochen und ein Fehler ausgegeben. Schließlich kann es vorkommen, dass der Schattenwurf nicht nur ein zulässiges Objekt trifft, sondern mehrere, wie in FIGUR 3 auf der rechten Seite angedeutet und sich aufgrund der Decke DECKE und Zwischendecke ZWISCHENDECKE ergibt. In diesem Fall wird gemäß Ausführungsbeispiel das Verfahren für alle Teilflächen wiederholt. Verbleiben mehrere gültige Optionen, so wird diejenige mit dem kürzesten Projektionsweg gewählt.

Wie zu erkennen ist, bietet die Erfindung mit seinen Ausgestaltungen gegenüber dem eingangs beschriebenen manuellen Prozesses viele Weiterbildungsmöglichkeiten durch weitere erfindungsgemäße Automatisierungsansätze, sodass die Übertragung der 2D Symbole 2DGPL ins 3D-Gebäudemodell BIM MODEL gemäß Weiterbildung auch direkt vor Ort auf einem mobilen Endgerät anstatt am Arbeitsplatzrechner erfolgen kann. Hierdurch könnte der so genannte "as-built" Status direkt im Gebäude verifiziert werden. Neben der Erstellung des konsistenten 3D Modells BIM MODEL kann das Verfahren auch als Montagehilfe für die entsprechenden Geräte verwendet werden.

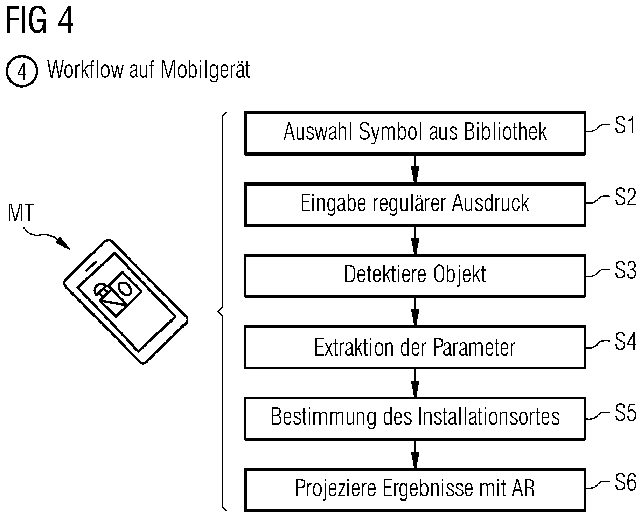

Als eine Ausführungsbeispiel dieser Weiterbildung mittels einem mobilen Endgerät MT, das beispielsweise als Smartphone oder Tablett ausgeführt ist, kann das Verfahren dabei, wie in FIGUR 4 gezeigt implementiert werden:
In einem ersten Schritt S1 wählt der Benutzer ein Symbol aus einer Library aus, dass im 2D Plan 2DGPL, welcher vorteilhafter Weise im Gerät angezeigt wird, gesucht werden soll. Alternativ wählt der Benutzer beispielhaft ein Symbol aus dem dargestellten Plan aus und ordnet ihm ein Symbol aus der Bibliothek zu.

In einem folgenden zweiten Schritt S2 gibt der Benutzer nun das Textmuster, beispielsweise "PAU", für die in der Bibliothek hinterlegten Parameter ein. Das Textmuster wird gemäß einer Weiterbildung der Erfindung dabei in der Regel aus einem fixen Teil und einer variablen Zahlen- oder Buchstabenkombination bestehen. Daher kann die Eingabe im Vergleich zu den o.g. komplexen regulären Ausdrücken auf wenige Varianten zur Auswahl beschränkt werden. Alternativ kann das Textmuster auch in der Bibliothek hinterlegt werden, wenn es dafür einen einheitlichen Standard gibt, wie beispielsweise Kennzeichnungssysteme gibt, die hierfür in äquivalenter Weise genutzt werden können. Prinzipiell kann es zu jedem Symbol beliebig viele Parameter und entsprechende Muster geben, solange sich die Muster wechselseitig ausschließen, also disjunkt sind.

Mit diesen Vorgaben können nun in einem dritten Schritt S3 die Objekte durch Detektion im 2D Gebäudeplan 2DGPL gefunden und sowie in einem vierten Schritt S4 die Parameter aus dem 2D Plan extrahiert werden, so dass in einem fünften Schritt der Installationsort gefunden werden kann, wobei dies beschrieben eine Projektion auf den 3D Plan BIM MODEL beinhaltet. Der 3D Plan BIM MODEL kann nun in einer Datenbank gespeichert werden und danach mit weiteren Gewerken angereichert werden.

In einem optionalen sechsten Schritt S6 kann das Ergebnis beispielsweise mit einem Augmented-Reality-Projektor (AR) angezeigt werden, beispielsweise mit dem Smartphone MT vor Ort, sodass der Nutzer in vorteilhafter Weise auch gleich einen Hinweis zur Montage des Geräts erhält.

## Patentansprüche

1. Computerimplementiertes Verfahren zum Generieren eines digitalen 3D, insbesondere so genannte "Building Information Modeling"-, BIM-, Gebäudemodells, mit den Schritten:
a) Einlesen eines ersten einem Gebäude zugeordneten 2D-Gebäudeplans über eine erste Schnittstelle,
b) Autodetektion mindestens eines Gebäudeplansymbols innerhalb des 2D-Gebäudeplans durch ein erstes Modul,
c) Autodetektion von mit, durch das jeweilige Gebäudeplansymbol zugeordneten im Gebäude zu installierenden, Geräten assoziierten Textdaten, innerhalb des 2D-Gebäudeplans, durch ein zweites Modul,
d) Durchführung einer Prozedur zur Bestimmung des Installationsortes, insbesondere die x,y-Koordinaten im 2D-Gebäudeplan, des jeweiligen Gerätes und Bestimmung von 3D-Koordinaten basierend auf einer Projektion, zumindest auf Grundlage der x,y-Koordinaten, insbesondere gemeinsam mit mindestens einem dem Gerät eindeutig zugeordneten Parameter, in den dreidimensionalen Raum eines 3D-Gebäudemodells des Gebäudes, das, insbesondere basierend auf einem aus dem mindestens einem dem Gebäude zugeordneten 2D-Gebäudeplan, initial gebildet wurde, durch ein drittes Modul,
e) Aktualisieren des 3D-Gebäudemodels durch Hinzufügen eines 3D-Gebäudemodells des Gerätes an den x,y,z-Koordinaten des bestimmten Installationsortes, durch ein viertes Modul,
f) Wiederholen der Schritte a) bis e), bis für alle aufgrund des mindestens einen 2D-Gebäudeplans verfügbaren Gebäudeplansymbole und/oder Textdaten die Autodetektion durchgeführt worden ist und/oder eine Abbruchbedingung erreicht worden ist, durch ein fünftes Modul,
g) Bilden von strukturierten, das aktualisierte 3D-Gebäudemodell repräsentierenden, Daten und Abspeichern der das aktualisierte 3D-Gebäudemodel repräsentierenden Daten.

2. Computerimplementiertes Verfahren, **dadurch gekennzeichnet, dass** die erste Schnittstelle derart betrieben wird, dass das Einlesen des mindestens einen 2D-Gebäudeplans durch Auslesen von aus strukturiert in einem Speicher abgelegten Daten und/oder durch optisches Scannen eines gezeichneten Planes erfolgt.

3. Computerimplementiertes Verfahren, **dadurch gekennzeichnet, dass** eine, insbesondere mit der ersten Schnittstelle identischen, zweite Schnittstelle derart betrieben wird, dass
a) ein zu detektierendes Gebäudeplansymbol durch eine Nutzereingabe und/oder ein optisches Erfassen eines gezeichneten Plans oder im Gebäude zu installierenden Geräts erfasst und für eine, insbesondere automatische, Auswahl eines zugeordneten ersten Suchmusters für die Autodetektion, insbesondere aus einer ersten Bibliothek verwandt wird,
b) das Suchmuster dem ersten Modul zur Durchführung des Autodetektion bereitgestellt wird.

4. Computerimplementiertes Verfahren nach einem der vorhergehenden Ansprüche, **dadurch gekennzeichnet, dass**
a) das erste Modul derart betrieben wird, dass das 2D-Gebäudemodell anhand eines durch eine optische Schnittstelle durchgeführten optischen und/oder anhand eines durch strukturiert in einem Speicher abgelegten Daten des 2D-Gebäudemodells digitalen Vergleichs mit dem Suchmuster durchgeführt wird, wobei bei Übereinstimmung das zu installierende Gerät bestimmt wird,
b) das zweite Modul derart betrieben wird, dass die x,y-Koordinaten innerhalb des 2D-Gebäudeplans auf Basis von optischem Scannen des gezeichneten 2D-Gebäudeplans und/oder der strukturiert abgelegten Daten des 2D-Gebäudeplans extrahiert werden,
c) die x,y-Koordinaten für eine Aktualisierung des 3D-Gebäudemodells strukturiert gespeichert und/oder direkt dem dritten Modul zur bereitgestellt werden.

5. Computerimplementiertes Verfahren nach einem der vorhergehenden Ansprüche, **dadurch gekennzeichnet, dass** das zweite Modul derart betrieben wird, dass ein Ermitteln eines Musters zur Autodetektion von Textdaten im 2D-Gebäude durch Auslesen aus einer ersten Bibliothek, Nutzereingabe und/oder durch optisches Scannen des 2D-Gebäudeplans erfolgt.

6. Computerimplementiertes Verfahren nach einem der vorhergehenden Ansprüche, **dadurch gekennzeichnet, dass** das dritte Modul derart betrieben wird, dass die Bestimmung der 3D-Koordinaten auf Grundlage zumindest eines Parameters, beispielsweise geographische Adressdaten, Geräteabmessungen, Schwellwerte, Montagehöhen, Toleranzwerte einzelner oder aller der genannten Werte und/oder, insbesondere bevorzugte, Ausrichtungen, des jeweiligen Gerätes erfolgt, wobei der Parameter durch Nutzereingabe, Auswertung der Daten des 2D-Gebäudemodells und/oder durch Scannen des 2D-Gebäudeplans, insbesondere im Nahfeld des dem Gerät zugeordneten Symbols, bestimmt wird.

7. Computerimplementiertes Verfahren nach dem vorhergehenden Anspruch, **dadurch gekennzeichnet, dass** das vierte Modul derart betrieben wird, dass das Hinzufügen auf Grundlage zumindest des einen Parameters derart erfolgt, dass für das Gerät zumindest temporär ein Begrenzungsrahmen als dreidimensionale Repräsentation des Geräts im 3D-Gebäudemodell ermittelt und als Teil der strukturierten Daten hinterlegt wird.

8. Computerimplementiertes Verfahren nach dem vorhergehenden Anspruch, **dadurch gekennzeichnet, dass** das dritte Modul und/oder vierte Modul derart betrieben wird, dass
a) die Projektion zur Bestimmung der 3D-Koordinaten derart durchgeführt wird, dass durch ein siebtes, insbesondere eine so genannte 3D-Engine betreibendes, Modul, insbesondere auf Grundlage des zumindest einen Parameters, ausgehend von den x,y-Koordinaten des 2D-Gebäudeplans und einer, insbesondere auf Grundlage des zumindest einen Parameters, festgelegten y-Koordinate eines durch einen im 3D-Gebäudemodell simulierten Lichteinfalls einen Schattenwurf derart errechnet, dass zumindest eine Fläche, insbesondere an einer Decke oder Wand des 3D-Gebäudemodells, bestimmt wird, an die das Gerät im 3D-Gebäudemodell kollisionsfrei platzierbar ist,
b) auf Grundlage des zumindest einen Parameters die Fläche und die x,y,z-Koordinaten des Gerätes festgelegt und/oder als Teil der strukturierten Daten gespeichert wird.

9. Computerimplementiertes Verfahren nach einem der vorhergehenden Ansprüche, **dadurch gekennzeichnet, dass** die strukturierten Daten in einer, zumindest temporär in einem integrierten flüchtigen Speichermodul, einem Wechselspeichermedium und/oder einem cloudbasierten Speicher gespeicherten, Datenbank hinterlegt werden.

10. Computerprogrammprodukt, das direkt in ein programmierbares prozessorgesteuertes Gerät, Computer, Tablett und/oder Tablet, ladbar ist, umfassend Programmcodeteile, die dazu geeignet sind, die Schritte des computerimplementierten Verfahrens nach einem der Ansprüche 1 bis 9 durchzuführen.

11. Anordnung, insbesondere bestehend aus zumindest einem prozessorgesteuerten Gerät, aufweisend Mittel, insbesondere zumindest Teile der Schnittstellen, Module und/oder Speicher gemäß den Schritten des Verfahrens nach einem der Ansprüche 1 bis 9, zur Durchführung des Verfahrens nach einem der Ansprüche 1 bis 9 und/oder zum Laden des Computerprogrammprodukts eingerichtet sind.
